# EUROPEAN PATENT SPECIFICATION

(11) **EP 0 536 395 B1**
(45) Date of publication and mention of the grant of the patent: **09.10.1996**
(21) Application number: 91901532.1
(22) Date of filing: 26.12.1990
(51) Int. Cl.: F16H 61/14, F16H 61/04

(54) **METHOD OF CONTROLLING SPEED CHANGE IN HYDRAULICALLY WORKING MULTISTAGE TRANSMISSION**
METHODE ZUR STEUERUNG DES GANGWECHSELS IN EINEM MEHRGANGGETRIEBE
PROCEDE DE REGLAGE DU CHANGEMENT DE VITESSE DANS UNE BOITE DE VITESSE HYDRAULIQUE MULTI-ETAGES

(30) Priority: 26.12.1989 JP 334972/89
(43) Date of publication of application: 14.04.1993
(73) Proprietor: KABUSHIKI KAISHA KOMATSU SEISAKUSHO, Minato-ku Tokyo 107 (JP)
(72) Inventor: KUSAKA, Kohei Kawasaki Factory of K.K. Komatsu, Kawasaki-shi Kanagawa-ken 210 (JP); OHKURA, Yasunori Technical Inst. of K.K. Komatsu, Hiratsuka-shi Kanagawa-ken 254 (JP)
(74) Representative: Grünecker, Kinkeldey, Stockmair & Schwanhäusser Anwaltssozietät
(86) International application number: JP9001712
(87) International publication number: WO9110086

(56) References cited:
- EP-A- 0 394 498
- JP-B-56 044 312

## Description

The present invention relates to a method and a system of controlling the shifting of a hydraulic-actuated type multi-step transmission for use on a large-sized construction vehicle and so forth.

In EP-A-0394498, published after the priority date of the present invention, a method of and a system for controlling the shifting a multi-step power transmission are disclosed. The multi-step transmission is equiped with a plurality of hydraulic clutches and gear trains, whereby a shift can be made into a desired speed gear by engaging a specific hydraulic clutch.

This type of hydraulic-actuated multi-step transmission is used in combination with a torque converter. This torque converter has a direct-coupled clutch in which pump and turbine blades of the torque converter are connected. During travelling the direct-coupled clutch is engaged for efficient transmission of a great torque. In case a vehicle should be decelerated from any high speed stage between the 7th speed and the 4th speed, i.e. a high transmission speed range, to coasting speed or the vehicle should be decelerated from any low speed stage, as for example the 3rd or 2nd speed, i.e. a low transmission speed range, to a coasting speed, the coasting speed is only obtainable by releasing an accelerator and brake pedal of the vehicle. During down-shift from the high transmission speed range to coasting speed the direct-coupled clutch is in engaged condition and during down-shift from the low transmission speed range to a coasting speed the direct-coupled clutch is disengaged.

Before it is decided according to EP-A-0394498 if a deceleration from a high or a low speed stage will take place it is detected if the accelerator is inoperative and the brake is inoperative, that means that accelerator and brake pedal are released. Only in case both detections are positive the deceleration by down-shifting will take place.

The present invention has as its object the provision of a method of and a system for controlling the shifting of a hydraulic-actuated type multi-step transmission in which no engagement shock will occur at the time of engagement of a direct-coupled clutch of a torque convertor.

To attain the above-described object, the present invention provides a method of controlling the shifting of a multi-step power transmission and a system for controlling of a transmission speed ratio of an automatic power transmission with the features of claim 1 and 2, respectively. According to the invention a down-shift first takes place with the lock-up clutch in an engaged state and thereafter a further down-shift takes place with said lock-up clutch in a disengaged state. The down-shift will take place if the shift command for down-shift is given and the accelerator is only partially depressed. In this case the down-shift from high speed stages may be performed when additionally the accelerator and brake pedal are released. That means, that such a deceleration by down-shifting will only take place if coasting is detected.

Subsequently, even if the accelerator is still partially depressed, the down-shift can take place from low speed stages, that means from 3rd and 2nd speed stages. In this case coasting is no requirement for down-shifting.

Moreover, according to the afore-mentioned shifting method system, it is possible to decrease a shock accommpanying a shifting operation by preventing the occurance of an engagement shock at the time of direct-coupled clutching engagement (ON), thereby giving no unpleasant feeling to the driver and improving the durability of the power transmission system.

In the following a preferred embodiment of the present invention will be described in connection with the accompanying drawings.

### BRIEF DESCRIPTION OF THE DRAWINGS:

Fig. 1 is a diagrammatic view for explaining the constitution of a power transmission system of a motor vehicle in which a method of controlling the shifting of the present invention is adopted;
Fig. 2 is a hydraulic circuit diagram of the power transmission system illustrated in Fig. 1;

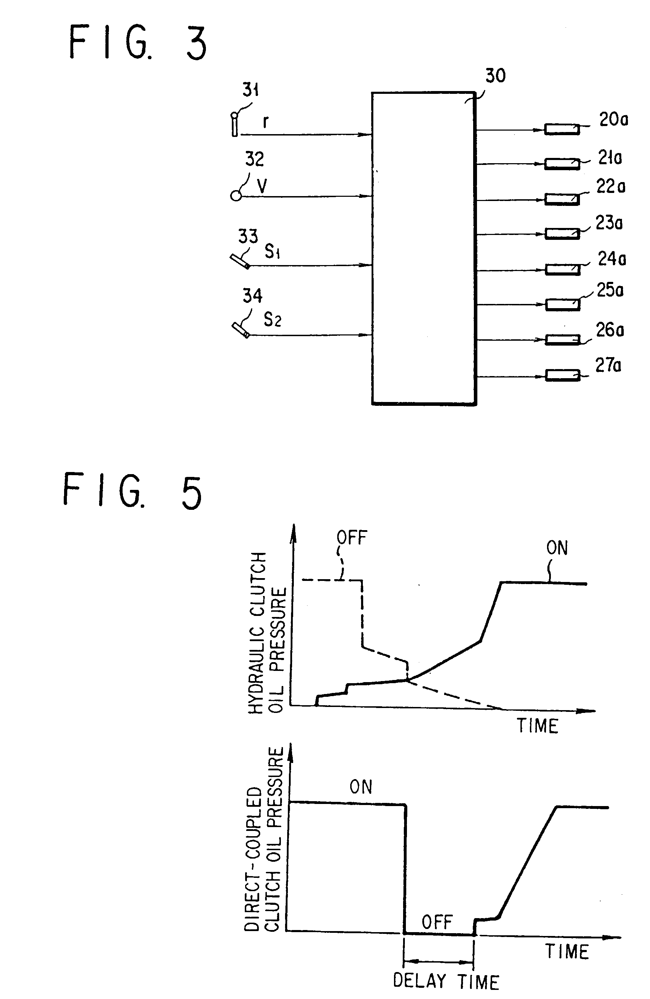

Fig. 3 is a control circuit diagram;
Fig. 4 is an operation flowchart; and
Fig. 5 is a graph showing a relationship between hydraulic pressure changes and the lapse of time in a direct-coupled clutch and other hydraulic clutches.

### DESCRIPTION OF THE PREFERRED EMBODIMENT:

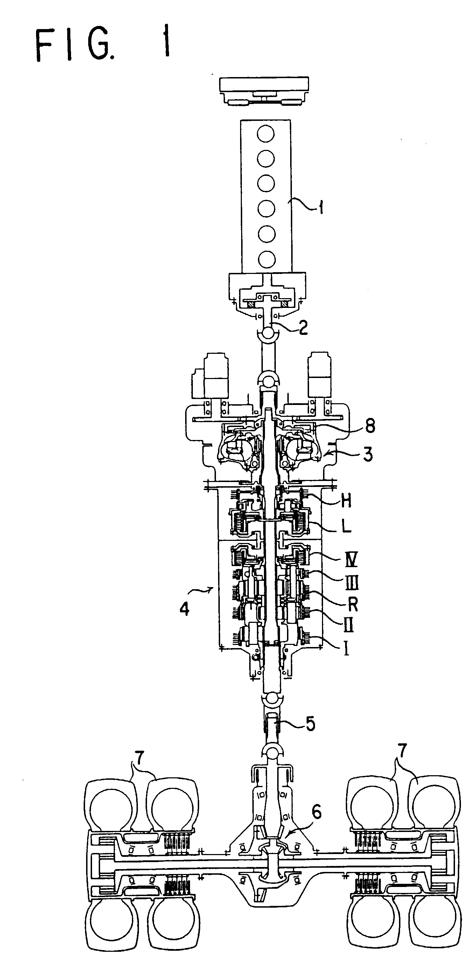

As shown in Fig. 1, an output shaft 2 of an engine 1 is connected to the input side of a torque converter 3, and its output side is connected to the input side of the hydraulic-actuated type transmission 4. Also the output side is connected to the right and left driving wheels 7 through a drive shaft 5 and a differential 6.

The above-mentioned torque converter 3 has a direct-coupled clutch 8 which connects a pump (impeller) on the input side to a turbine wheel on the output side. The hydraulic-actuated type transmission 4 is equipped with a high-speed hydraulic clutch H, a low-speed hydraulic clutch L, a fourth hydraulic clutch IV, a third hydraulic clutch III, a reverse hydraulic clutch R, a second hydraulic clutch II, and a first hydraulic clutch I, and changes gear ratios as tabled below by engaging and disengaging these hydraulic clutches.

**TABLE**

| Hydraulic clutch | Speeds | | | | | | | |
|---|---|---|---|---|---|---|---|---|
| | Forward | | | | | | | Reverse |
| | 1st | 2nd | 3rd | 4th | 5th | 6th | 7th | 1st |
| H | | | ON | | ON | | | |
| L | ON | ON | | ON | | ON | | ON |
| IV | | | | | | ON | ON | |
| III | | | | ON | ON | | | |
| R | | | | | | | | ON |
| II | | ON | ON | | | | | |
| I | ON | | | | | | | |

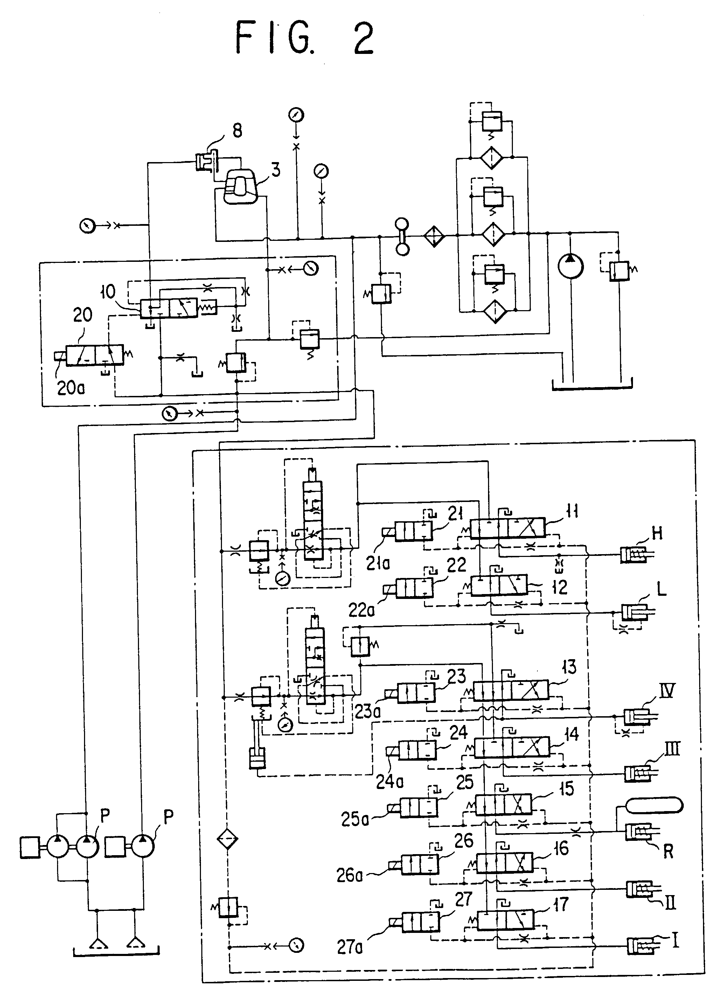

The direct-coupled clutch 8 stated above, as shown in Fig. 2, has a direct-coupled clutch valve 10 for controlling the supply of a hydraulic oil from the pump P; and each hydraulic clutch has a high-speed valve 11, a low-speed valve 12, a fourth valve 13, a third valve 14, a reverse valve 15, a second valve 16, and a first valve 17 to control the supply of the hydraulic oil delivered from the pump P. The direct-coupled clutch valve 10 is switched by a first solenoid valve 20, and each valve is switched by means of a second, third, fourth, fifth, sixth, seventh and eighth solenoid valves 21, 22, 23, 24, 25, 26 and 27. These solenoid valves are designed to be operated by solenoids 20a to 27a. These solenoids, when energized, switch these valves for engagement of the direct-coupled clutch valve 10 and hydraulic clutches.

The above-described constitution, known as a prior art, will not be described in detail.

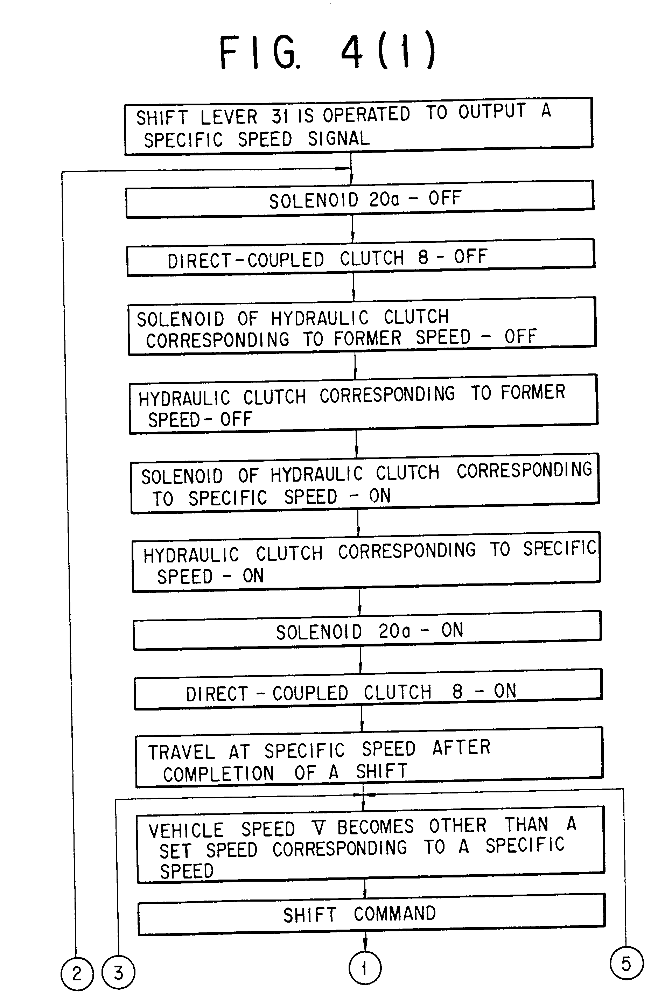

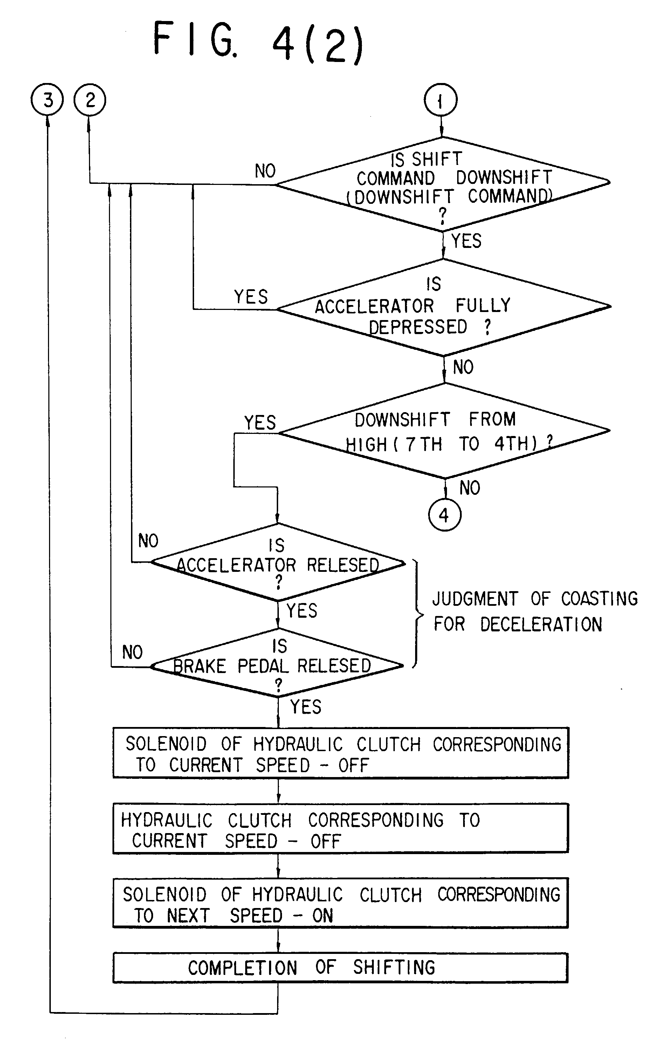

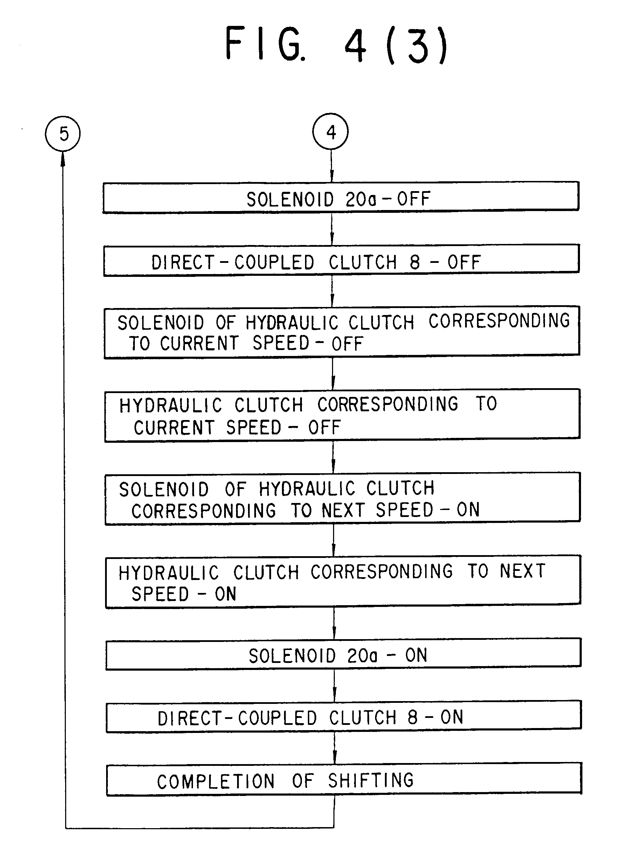

The solenoids 20a to 27a previously stated are controlled by means of a controller 30. To this controller 30 are inputted a speed signal γ from a shift lever 31, a vehicle speed V from a vehicle speed sensor 32, an accelerator off signal S from an acceleration sensor 33, and a brake off signal S from a brake pedal 34. Also, as shown in Fig. 4, the controller 30 controls the solenoids 20a to 27a, thereby controlling shifting operation.

In the flowchart shown in Fig. 4, with the on-off operation of the solenoid 20a, the delay timer is operated upon receiving a shift command, so that the hydraulic pressure at the hydraulic clutch and the hydraulic pressure at the direct-coupled clutch 8 will increase or decrease as shown in Fig. 5.

That is, when coasting and shifting down from for example one of the seventh to fourth speeds with the accelerator and brake pedals released, a downshift is automatically performed with the direct-coupled clutch 8 kept engaged, thus decelerating smoothly within a short time by effectively utilizing the engine brake.

Also, when just stopping the vehicle, a downshift is automatically made once to low, for example from the third to the second speed with the direct-coupled clutch 8 held engaged. Then, with the accelerator released, and besides with the direct-coupled clutch held in the disengaged state, when disengaged at the time of shifting, until its engagement is required, a downshift is automatically made, thereby preventing the occurrence of an engagement shock when the direct-coupled clutch 8 is engaged.

After a downshift was made into low as previously stated, the vehicle speed is substantially low, and therefore it is unnecessary to use the engine brake. No problem will occur if a downshift is effected with the direct-coupled clutch 8 disengaged.

In case the vehicle speed decreases notwithstanding that the accelerator is fully depressed at the entry of an upgrade, the direct-coupled clutch 8 is disengaged only at the time of shifting and engaged after the completion of the shifting.

## Claims

1. A method of controlling the shifting of a multi-step power transmission which is shiftable between a plurality of transmission speed ratios including a first group of transmission speed ratios falling within a high transmission speed range and a second group of transmission speed ratios falling within a low transmission speed range, in which down-shifting of said transmission from a higher ratio within said high transmission speed range is performed with a direct-coupled clutch of a torque converter maintained in an engaged state and shifting-down of the transmission within said low transmission speed range is performed with said direct-coupled clutch maintained in a disengaged state, wherein automatic down-shifting is performed in a sequence of operations comprising the steps of:
automatically effecting a down-shifting of said transmission from a higher transmission speed ratio within said high transmission speed range to a lower transmission speed ratio for deceleration with said direct-coupled clutch of said torque converter maintained in an engaged state, when coasting is detected; and
subsequently and automatically effecting a further shifting-down of the transmission from a higher transmission speed ratio within said low transmission speed range to a lower transmission speed ratio independently of coasting with said direct-coupled clutch maintained in a disengaged state while the accelerator is only partially depressed.

2. A system for controlling of a transmission speed ratio of an automatic power transmission (4) which is cooperated with a torque converter (3) incorporating a lock-up clutch for direct coupling of an output of a prime mover (1) of the vehicle to an input of said power transmission including a first group of transmission speed ratios falling within a high transmission speed range and a second group of transmission speed ratios falling within a low transmission speed range, in which down-shifting of said transmission is performed from a higher ratio within said high transmission speed range with a direct-coupled clutch (8) of said torque converter maintained in an engaged state and a shifting-down of the transmission is performed within said low transmission speed range with said direct-coupled clutch (8) maintained in a disengaged state, comprising:
means for detecting a current transmission speed ratio;
means (33) for detecting a depression magnitude of a vehicular accelerator;
means for detecting a predetermined lock-up condition for establishing a lock-up condition of said lock-up clutch in said torque converter (3);
means for detecting a down-shifting demand;
means for effecting down-shifting from the current transmission speed ratio to a lower transmission speed ratio in response to said down-shifting demand,
wherein
means for controlling the condition of said lock-up clutch (8) between the lock-up condition and a released condition based on said current transmission speed ratio and said depression magnitude of said accelerator during down-shifting operation of the transmission speed ratio are provided, which means maintain said lock-up clutch (8) at the lock-up condition during down-shift through several ratios starting from a high transmission speed ratio and said high range after coasting is detected and, subsequently, maintaining the lock-up clutch at the released condition during further down-shift within said low range independantly of coasting and the detected condition of the accelerator pedal during the down-shifting within low range.

## Patentansprüche

1. Verfahren zur Steuerung des Gangwechsels in einem Mehrganggetriebe, welches zwischen einer Vielzahl von Getriebegeschwindigkeitsverhältnissen einschließlich einer ersten Gruppe von Getriebegeschwindigkeitsverhältnissen innerhalb eines hohen Getriebegeschwindigkeitsbereiches und einer zweiten Gruppe von Getriebegeschwindigkeitsverhältnissen innerhalb eines niedrigen Getriebegeschwindigkeitsbereiches schaltbar ist, wobei ein Herunterschalten des Getriebes von einem hohen Verhältnis innerhalb des hohen Getriebegeschwindigkeitsbereiches mit einer direkt gekoppelten Kupplung eines Drehmomentwandlers in ihrem Eingriffszustand erfolgt und ein Herunterschalten des Getriebes innerhalb des niedrigen Getriebegeschwindigkeitsbereiches mit entkuppelter direkt gekoppelter Kupplung erfolgt, wobei das automatische Herunterschalten mittels einer Folge von Operationen mit den folgenden Schritten durchgeführt wird:
Automatisches Bewirken eines Herunterschaltens des Getriebes von einem hohen Getriebegeschwindigkeitsverhältnis innerhalb des hohen Getriebegeschwindigkeitsbereiches zu einem niedrigen Getriebegeschwindigkeitsverhältnis zum Abbremsen mit der direkt gekoppelten Kupplung des Drehmomentwandlers im gekuppelten Zustand, wenn Freilauf erfaßt wird; und
anschließendes und automatisches Bewirken eines weiteren Herunterschaltens des Getriebes von einem hohen Getriebegeschwindigkeitsverhältnis innerhalb des niedrigen Getriebegeschwindigkeitsbereiches zu einem niedrigen Getriebegeschwindigkeitsverhältnis unabhängig vom Freilauf mit der direkt gekoppelten Kupplung im entkuppelten Zustand, während das Beschleunigungspedal nur teilweise niedergedrückt ist.

2. System zur Steuerung eines Getriebegeschwindigkeitsverhältnisses eines Automatikgetriebes (4) mit einem Drehmomentwandler (3) einschließlich einer Überbrückungskupplung zum direkten Koppeln eines Ausgangs eines Krafterzeugers (1) des Fahrzeugs mit einem Eingang des Getriebes, welches eine erste Gruppe von Getriebegeschwindigkeitsverhältnissen, die in einen hohen Getriebegeschwindigkeitsbereich fallen, und eine zweite Gruppe von Getriebegeschwindigkeitsverhältnissen aufweist, die in einen niedrigen Getriebegeschwindigkeitsbereich fallen, wobei ein Herunterschalten des Getriebes von einem hohen Verhältnis innerhalb des hohen Getriebegeschwindigkeitsbereiches mit der direkt gekoppelten Kupplung (8) des Drehmomentwandlers im Eingriffszustand und ein Herunterschalten des Getriebes innerhalb des niedrigen Getriebegeschwindigkeitsbereiches mit der direkt gekoppelten Kupplung (8) in ihrem entkuppelten Zustand erfolgt, wobei das System aufweist:
eine Erfassungseinrichtung zum Erfassen eines gegenwärtigen Getriebegeschwindigkeitsverhältnisses;
eine Erfassungseinrichtung (33) zum Erfassen einer Niederdruckgröße des Fahrzeugbeschleunigers;
eine Erfassungseinrichtung zum Erfassen einer vorbestimmten Überbrückungsbedingung zum Herstellen einer Überbrückungsbedingung der Überbrückungskupplung in dem Drehmomentwandler (3);
eine Erfassungseinrichtung zum Erfassen einer Runterschaltanforderung;
einer Einrichtung zum Runterschalten vom gegenwärtigen Getriebegeschwindigkeitsverhältnis zu einem niedrigeren Getriebegeschwindigkeitsverhältnis als Folge der Runterschaltanforderung, wobei
eine Einrichtung zur Steuerung der Bedingung der Überbrückungskupplung (8) zwischen der Überbrückungsbedingung und einer freigegebenen Bedingung auf der Grundlage des gegenwärtigen Getriebegeschwindigkeitsverhältnisses und der Niederdrückgröße des Beschleunigers während des Herunterschaltens des Getriebegeschwindigkeitsverhältnisses vorgesehen ist, welche Steuereinrichtung die Überbrückungskupplung (8) in ihrer Überbrückungsbedingung während des Herunterschaltens durch mehrere Verhältnisse beginnend mit einem hohen Getriebegeschwindigkeitsverhältnis und bei Erfassen des hohen Bereiches nach Freilaufen beibehält, und anschließend die Überbrückungskupplung in der freigegebenen Bedingung während des weiteren Herunterschaltens innerhalb des niedrigen Bereiches unabhängig vom Freilaufen und der erfaßten Bedingung des Beschleunigungspedals während des Herunterschaltens innerhalb des niedrigen Bereiches beibehält.

## Revendications

1. Procédé de réglage du changement de vitesse dans une boîte de vitesse multi-étages pouvant changer entre une pluralité de rapports de vitesse de transmission comprenant un premier groupe de rapports de vitesse de transmission se situant au sein d'une plage de vitesses de transmission élevées, et un deuxième groupe de rapports de vitesse de transmission se situant au sein d'une plage de vitesses de transmission basses, dans lequel la rétrogradation de ladite transmission à partir d'un rapport plus élevé au sein de ladite plage de vitesses de transmission élevées est réalisée avec un embrayage direct d'un convertisseur de couple maintenu dans un état engrené et la rétrogradation de la transmission au sein de ladite plage de vitesses de transmission basses est réalisée avec ledit embrayage direct maintenu dans un état désengrené, dans lequel la rétrogradation automatique est réalisée dans une suite d'opérations comprenant les étapes consistant à :
effectuer automatiquement une rétrogradation de ladite boîte de vitesse à partir d'un rapport de vitesse de transmission plus élevé au sein de ladite plage de vitesses de transmission élevées à un rapport de vitesse de transmission plus bas pour la décélération, ledit embrayage direct dudit convertisseur de couple étant maintenu dans un état engrené, lorsque l'erre est détectée ; et
à effectuer à la suite et automatiquement une autre rétrogradation de la boîte de vitesse à partir d'un rapport de vitesse de transmission plus élevé au sein de ladite plage de vitesses de transmission basses à un rapport de vitesse de transmission plus bas indépendamment de l'erre, ledit embrayage direct étant maintenu dans un état désengrené tandis que l'accélérateur est seulement partiellement abaissé.

2. Système de réglage d'un rapport de vitesse de transmission dans une boîte de vitesse automatique (4) auquel concourt un convertisseur de couple (3) contenant un embrayage de blocage pour l'accouplement direct d'une sortie d'un moteur (1) du véhicule à une entrée de ladite boîte de vitesse comprenant un premier groupe de rapports de vitesse de transmission se situant au sein d'une plage de vitesses de transmission élevées et un deuxième groupe de rapports de vitesse de transmission se situant au sein d'une plage de vitesses de transmission basses, dans lequel la rétrogradation de ladite boîte de vitesse est réalisée à partir d'un rapport plus élevé au sein de ladite plage de vitesses de transmission élevées, un embrayage direct (8) dudit convertisseur de couple étant maintenu dans un état engrené et une rétrogradation de la boîte de vitesse est réalisée au sein de ladite plage de vitesses de transmission basses, ledit embrayage direct (8) étant maintenu dans un état désengrené, comprenant :
des moyens de détection d'un rapport de vitesse de transmission en cours ; des moyens (33) de détection de l'ampleur de l'enfoncement d'un accélérateur de véhicules ; des moyens de détection d'un état de blocage prédéterminé destinés à mettre en évidence un état de blocage dudit embrayage de blocage dans ledit convertisseur de couple (3) ; des moyens de détection d'une demande de rétrogradation ; des moyens destinés à effectuer la rétrogradation à partir d'un rapport de vitesse de transmission en cours à un rapport de vitesse de transmission plus bas en réaction à ladite demande de rétrogradation, dans lequel sont fournis des moyens de réglage de l'état dudit embrayage de blocage (8) entre l'état de blocage et un état relâché se fondant sur ledit rapport de vitesse de transmission en cours et ladite ampleur d'enfoncement dudit accélérateur pendant l'opération de rétrogradation du rapport de vitesse de transmission, lesquels moyens maintiennent ledit embrayage de blocage (8) à l'état de blocage pendant la rétrogradation à plusieurs rapports en partant d'un rapport de vitesse de transmission élevé et de ladite plage élevée après détection de l'erre et, ultérieurement, en maintenant l'embrayage de blocage à l'état relâché pendant une autre rétrogradation au sein de ladite plage basse indépendamment de l'erre et de l'état détecté de la pédale d'accélérateur pendant la rétrogradation au sein de la plage basse.
